# EUROPEAN PATENT SPECIFICATION

(11) **EP 4 134 541 B1**
(45) Date of publication and mention of the grant of the patent: **31.07.2024**
(21) Application number: 21867910.8
(22) Date of filing: 09.12.2021
(51) Int. Cl.: F03B 13/24, F03B 13/14

(54) **WAVE POWER GENERATION UNIT AND WAVE POWER GENERATION DEVICE COMPRISING SAME, AND WAVE POWER GENERATION METHOD OF WAVE POWER GENERATION DEVICE**
STROMERZEUGUNGSEINHEIT UNTER VERWENDUNG VON WELLENENERGIE, STROMERZEUGUNGSVORRICHTUNG UNTER VERWENDUNG VON WELLENENERGIE UND STROMERZEUGUNGSVERFAHREN UNTER VERWENDUNG VON WELLENENERGIE
UNITÉ DE PRODUCTION D'ÉNERGIE HOULOMOTRICE ET DISPOSITIF DE PRODUCTION D'ÉNERGIE HOULOMOTRICE LE COMPRENANT, ET PROCÉDÉ DE PRODUCTION D'ÉNERGIE HOULOMOTRICE D'UN DISPOSITIF DE PRODUCTION D'ÉNERGIE HOULOMOTRICE

(30) Priority: 28.06.2021 CN 202110719557
(43) Date of publication of application: 15.02.2023
(73) Proprietor: Ocean University of China, Qingdao, Shandong 266100 (CN)
(72) Inventor: LIU, Zhen, Qingdao, Shandong 266100 (CN); ZHANG, Xiaoxia, Qingdao, Shandong 266100 (CN); LI, Ming, Qingdao, Shandong 266100 (CN); XU, Chuanli, Qingdao, Shandong 266100 (CN); QU, Na, Qingdao, Shandong 266100 (CN)
(74) Representative: Wächter, Jochen
(86) International application number: PCT/CN2021/136791
(87) International publication number: WO 2023/273174

(56) References cited:
- EP-A2- 0 950 812
- CN-A- 101 568 720
- CN-A- 108 425 788
- CN-A- 109 236 549
- CN-A- 113 266 515
- JP-U- H 068 767
- KR-B1- 101 093 448

## Description

### TECHNICAL FIELD

The present invention relates to the technical field of wave energy conversion, and specifically relates to a power generation unit using wave energy, a power generation device using wave energy and a power generation method using wave energy.

### BACKGROUND ART

With the deep implementation of ocean strategy in China, there are needs to develop urgently an offshore power supply system using renewable energy that meets deep sea development. An individual BBDB device (Backward Bent Duct Buoy power generation device using wave energy) is an existing device applied to utilization of ocean wave energy. The device includes three parts, i.e., a floating body, a bent duct with a water inlet opposite to a wave direction, and a rear-end air turbine. Due to the device with the backward bent ducts is simple in structure, the rear-end air turbine is not in contact with seawater. Thus, there are no underwater movable parts and the service period of the device is obviously longer than that of other power generation devices using wave energy.

At present, the device with individual backward bent ducts is mainly designed for different types of bents and floating bodies. For the floating body, Liang Xianguang considers that the best floating body is a floating body with front-square, rear-round floating chamber and rear extension type (Liang Xianguang, Jiang Niandong, Wang Wei, etc. Research on the 5kW-BBDB Wave-Activated Generation Device [J]. Ocean Engineering, 1999, 17 (004): 55-63.). Liang Xianguang researches a BBDB device with a single-row parallel ducts (Liang Xianguang, Sun Peiya, Experimental Study of Parallel-connection Backward-bent Duct Generation Buoy Models' Performance [J]. Ocean Engineering, 2003, 21 (003): 83-88.). Sun Li takes the combination of the device with the individual backward bent ducts and breakwater to use for safety protection of ocean equipment. Wu Bijun designs various device models with individual backward bent ducts (Wu Bijun, Li Meng, Wu Rukang, etc. Research on the Backward Bent Duct Buoy Wave Energy Conversion Technology and Prototype Design [J]. Ocean Technology Journal, 2016 (5): 10-16). And researches on devices abroad are carried out based on optimization of the patterns and dimensions of the floating bodies and bent ducts of the device ((Open Sea Trials on Floating Wave Energy Device Backward Bent Ducted Buoy and Its Performance Optimization Volume 2), (Luczko E, Robertson B, Bailey H, et al. Representing non-linear wave energy converters in coastal wave models [J]. Renewable Energy, 2018: 376-385.), (Numerical study of a large floating oscillating water column device using a 2D boundary element method)).

However, research on the device with arrays is essentially not carried out. Development of wave energy is gradually developed towards the deep sea and guarantee of energy supply is an important part. Previously, research and development of wave energy was mainly used for offshore independent power supply equipment. Due to the limitation of a size of the device itself, the output of generated power cannot meet the electricity demand. In order to improve the power generation capacity, a larger number of individual backward bent duct buoys are usually arranged in a scattered array. However, the backward bent duct buoys each have six-degree-of-freedom movement under the action of wave force, and the scattered-point type array is not beneficial to energy capture of the rear-row device due to shielding effect. In addition, for the device with the individual backward bent ducts, there is not enough research how to fully utilize wave energy to convert the wave energy into oscillation of air in an air chamber. Chinese patent application publication No. CN108425788A discloses a one-way impulse type power generation device using wave energy, in which a fixed block and a first fixed ring are installed in an air cabin, and an aluminum alloy cover plate is provided with a movable rod which penetrates through and rotates around the first fixed ring; a first end of an air inlet bent duct is installed in a draft cabin below the aluminum alloy cover plate, a second end of the air inlet bent duct is located at an upper part of a buoyancy cabin and provided with a second fixed ring, and a rubber sheet that is capable of attaching closely to or loosening the second fixed ring is arranged in the second end of the air inlet bent duct; and an air outlet straight pipe is installed at an upper part of the air cabin and connected with a mounting pipe and a one-way impulse type air turbine via a first flange plate. That is to say, according to this scheme, only the internal structure of the individual backward bent duct structure is improved, and the effect of better utilization of wave energy cannot be achieved. The Chinese patent application publication No. CN107044379A discloses an offshore self-propelled power supply device using green energy, in which a ship body is provided with at least one power generation unit group using wave energy. The power generation unit group using wave energy includes a right side power generation unit using wave energy and a left side power generation unit using wave energy. That is to say, according to this scheme, individual backward bent duct structures are installed on the ship body. However, the vibration frequency of the backward bent duct structure itself is obviously reduced. In addition, only the individual backward bent duct structures are utilized in the scheme, so better utilization effect of the wave energy cannot be achieved.

For example, EP0950812A2 discloses that a wave power generating apparatus is provided with a plurality of L-shaped ducts and floats. The ducts are composed of vertical and horizontal ducts. The vertical ducts each have an air chamber thereon where an impulse turbine and an electric power generator are installed. Each float has a vertical square pillar and a vertical rear half cylinder attached thereto and is fixedly attached onto the horizontal duct. The apparatus has high efficiency to convert wave power to electric power and needs low mooring force to keep the apparatus on an offshore. Further, JP H06 8767 U discloses a buoy comprising a similar wave power apparatus having vertical and horizontal cylindrical ducts.

### SUMMARY

The present invention aims to provide a power generation unit using wave energy, a power generation device using wave energy and a power generation method using wave energy, so as to solve the problems in the prior art. Vertical sections of adjacent bent ducts communicate with each other to do work on a same air turbine, so that the flow rate of reciprocating airflow in an air chamber can be increased, the utilization efficiency of wave energy can be remarkably improved, and the installed capacity can be improved.

In order to achieve the above purpose, the present invention provides the following technical solution.

The present invention provides a power generation unit using wave energy, comprising a plurality of individual backward bent duct structures connected in parallel, wherein each of the plurality of the individual backward bent duct structures comprises a bent duct and a floating body, the bent duct comprises a vertical section of the bent duct and a horizontal section of the bent duct, an upper part of the horizontal section of the bent duct is connected with the floating body, the vertical section communicates with another vertical section of the bent duct that is adjacent to the vertical section, the vertical section of the bent duct of one of the plurality of the individual backward bent duct structures is connected with an air chamber pipeline, and an air turbine is arranged in the air chamber pipeline, wherein a cross section of the horizontal section of the bent duct is fan-shaped to form an open horizontal section, and an inner dimension of the horizontal section reduces gradually towards a centre of the horizontal section.

In some embodiments, the air chamber pipeline may be in a same direction as the horizontal section of the bent duct, and may be located at an upper part of the floating body.

In some embodiments, the floating body may be connected with floating bodies of other ones of the plurality of individual backward bent duct structures into a whole.

The present invention provides a power generation device using wave energy, comprising a plurality of power generation units using wave energy mentioned above, and the plurality of power generation units using wave energy may be connected into a ring or a polygon.

In some embodiments, for each of the plurality of power generation units using wave energy, the power generation unit may be directly connected with another power generation unit of the plurality of power generation units using wave energy which is adjacent to the power generation unit, or may be connected with the other power generation unit via a connecting section.

In some embodiments, the connecting section may be a connecting corner, and may have a same material as the floating body.

A power generation method of a power generation device using wave energy of the present invention is that: under predetermined wave conditions, adjusting draught of the power generation device using wave energy, and measuring wave heights of wave movement in an air chamber which are corresponding to different draught respectively; comparing the wave heights of the wave movement after being measured with each other, and selecting the draught which is corresponding to a maximum one of the wave heights of the wave movement; and installing the power generation device using wave energy based on the draught after being selected, and generating power by using wave energy.

In some embodiments, when the draught is adjusted, measuring the wave heights of the wave movement based on a low-density draught spacing, and selecting a section of the wave heights of the wave movement which has relatively larger wave heights; and measuring the section of the wave heights of the wave movement based on a high-density draught spacing, and obtaining the draught which is corresponding to the maximum one of the wave heights of the wave movement.

In some embodiments, optimizing parameters comprise an opening direction of the air chamber, an opening size of the air chamber, a sectional area size of the air chamber, a length of a bent duct and an opening sectional area of the bent duct.

Compared with the prior art, the embodiments have the following technical effects.

Firstly, the power generation unit using wave energy in the embodiments connect a plurality of individual backward bent duct structures together, so that vertical sections of adjacent bent ducts communicate with each other to do work on a same air turbine. In this way, the flow rate of reciprocating airflow in the air chamber can be increased, the utilization efficiency of wave energy can be improved significantly, and the installed capacity can be improved.

Secondly, the power generation device using wave energy of the present invention is formed to be a ring or a polygon by connecting a plurality of power generation units using wave energy, which forms a compact array with a certain topological structure. So, not only shielding effect (an individual backward bent duct buoy has six-degree-of-freedom movement under the action of wave force effect when the individual backward bent duct buoy is independently applied, and a scattered point type array is not beneficial to energy capture of a rear-row device due to the shielding effect) can be avoided, but also movement of the power generation device using wave energy and the wave movement can generate resonance effect by reasonably arranging the number of arrays of the power generation units using wave energy. Thus, the overall performance of the array device can be obviously improved.

Thirdly, the power generation device using wave energy of the present invention is formed by connecting the power generation units using wave energy, and the connecting section is arranged between the power generation units using wave energy. The connecting sections can be used as floating bodies and can also be used for an integrated power supply device of a rear-end air turbine. Therefore, the whole structure can be assembled, and is compact in structure and convenient to be installed and disassembled. The device can be used immediately after being put into use, and can be disassembled many times, thus the device has the ability to be used continuously. In addition, as the whole body of the device is of a blocked type assembly structure (modularization is formed), the topological structure, the number of arrays, the number of turbines and the like can be flexibly arranged according to the requirements of commissioning places, service positions and demands for electricity consumption.

Fourthly, the power generation device using wave energy of the present invention can be formed by assembling a plurality of power generation units using wave energy which can share anchor points therebetween, and a mooring mode is reasonably arranged, so that the commissioning cost can be reduced.

Fifthly, the present invention provides a thought for improving utilization efficiency of wave energy by forming resonance, and changes such a mode in the prior art that only an individual backward bent duct structure is improved and the number of scattered arrays of the backward bent duct structures is increased to enhance the generating capacity. And, a maximum movement wave height of a water surface in the air chamber is obtained in a parameter optimization process of the power generation device using wave energy. In turn, optimal use conditions of the device can be achieved by improving relevant parameters, so that the utilization efficiency of wave energy can be improved.

### BRIEF DESCRIPTION OF THE DRAWINGS

To illustrate the embodiment of the present invention or the technical scheme in the prior art more clearly, the accompanying drawings required in the embodiment will be briefly described below. Apparently, the accompanying drawings in the following description show merely some embodiments of the present invention, but also some examples not according to the invention for illustration purposes only. For those skilled in the art, other drawings may be obtained according to the accompanying drawings without creative efforts.
FIG. 1 is a schematic diagram of a rectangular individual backward bent duct structure (not according to the invention);
FIG. 2 is a schematic diagram of an example of a power generation unit using wave energy formed by rectangular individual backward bent duct structures (not according to the invention);
FIG. 3 is a schematic diagram of another rectangular individual backward bent duct structure in a power generation unit using wave energy (not according to the invention);
FIG. 4 is a schematic diagram of an example of a polygonal power generation device using wave energy formed by rectangular individual backward bent duct structures (not according to the invention);
FIG. 5 is a schematic diagram of an example of an annular power generation device using wave energy formed by rectangular individual backward bent duct structures (not according to the invention);
FIG. 6 is a schematic diagram of a fan-shaped individual backward bent duct structure;
FIG. 7 is a schematic diagram of a power generation unit according to the invention using wave energy formed by fan-shaped individual backward bent duct structures;
FIG. 8 is a schematic diagram of a power generation device according to the invention using wave energy formed by fan-shaped individual backward bent duct structures; and
FIG. 9 is a curve chart showing influence of draught on wave heights in an air chamber.

Reference signs: 1, horizontal section of bent duct; 2, vertical section of bent duct; 3, floating body; 4, air chamber pipeline; and 5, connecting section.

### DETAILED DESCRIPTION OF SPECIFIC EXAMPLES AND INVENTIVE EMBODIMENTS

Technical solutions in the embodiments of the present invention will be clearly and completely described herein below with reference to the drawings in the embodiments of the present invention. Apparently, the embodiments described below are merely a part rather than all of the embodiments of the present invention. The specific examples not according to the invention are for information purposes only.

The present invention aims to provide a power generation unit using wave energy, a power generation device using wave energy and a power generation method using wave energy, so as to solve the problems in the prior art. The vertical sections of the adjacent bent ducts communicate with each other to do work on a same air turbine, so that the flow rate of reciprocating airflow in an air chamber can be increased, the utilization efficiency of wave energy can be remarkably improved, and the installed capacity can be improved.

To make the foregoing objective, features and advantages of the present invention clearer and comprehensible, the present invention is further described in detail below with reference to the accompanying drawings and specific embodiments. Additionally, examples not according to the invention are further described in detail below with reference to the accompanying drawings for information purposes only.

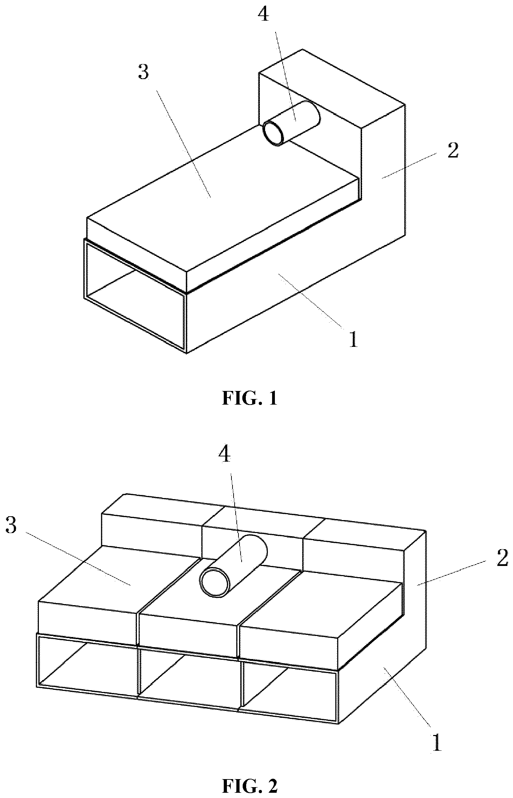

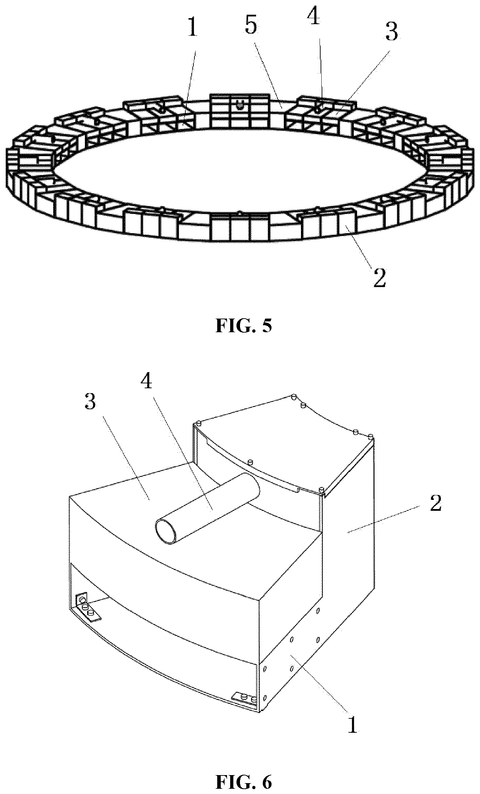

Referring to FIGS. 1 to 3 (not according to the invention), and as shown in FIGS. 6 to 7 (according to the invention), the present invention provides a power generation unit using wave energy. The power generation unit using wave energy includes a plurality of individual backward bent duct structures connected in parallel. The individual backward bent duct structures can in an illustrative example not according to the invention each be rectangular (as shown in FIGS. 1 to 3) or fan-shaped (as shown in FIGS. 6 to 7 and according to the invention) and are each formed by splicing baffle plates together. The baffle plates can be connected with each other via bolts, and connecting gaskets can be arranged therebetween. It needs to be stated that the bolts include bolts arranged in the lateral direction and bolts arranged at the bottom. The bolts arranged in the lateral direction can enable limitation in the horizontal plane range, and the bolts located at the bottom of the bent duct can limit vertical oscillation between the bent ducts. By arranging the bolts in various directions, the integrity of the individual backward bent duct structures can be enhanced, and the structural stability can be avoided from being affected by wave impact in seawater. The individual backward bent duct structure includes a bent duct and a floating body 3. The floating body 3 can be of a box-type structure, and counterweight is additionally arranged in the floating body 3 to adjust a position relative to the water surface; or the floating body 3 is made of a light material. In summary, the floating body 3 is used for providing buoyancy, so that the whole device can float on the water surface with certain draught. The bent duct includes a vertical section of the bent duct 2 and a horizontal section of the bent duct 1 which communicate with each other. A horizontal opening of the horizontal section of the bent duct 1 is used for collecting waves, and the air chamber is formed in the vertical section of the bent duct 2. The waves impact air in the air chamber to form oscillation after entering the horizontal section 1. And, the oscillating air impacts the air turbine, so that the air turbine is enabled to do work to generate electricity. The floating body 3 is connected to an upper part of the horizontal section 1 and can be connected by adopting conventional rigid body connecting structures, such as connecting frameworks, positioning grooves, screws, tenons and matched mortises. A size of the floating body 3 is correspondingly adjusted according to requirement of the draught. The individual backward bent duct structures are connected on the side faces, bolts can also be adopted for their connection, and the connection position therebetween can be the same as the arrangement position of the bolts of a single individual backward bent duct structure. In other words, the individual backward bent duct structures can be directly assembled on the basis of the baffle plates to form the power generation unit using wave energy. It needs to be noted that the adjacent vertical sections 2 communicate with each other to form a connected air chamber. In addition, the vertical section 2 of one of the individual backward bent duct structures is connected with an air chamber pipeline 4, and an air turbine is arranged in the air chamber pipeline 4. The air turbine can be an impulse turbine, a Wells turbine and the like, and a generator, a storage battery and other devices are mounted at a rear end of the air turbine. Adjacent horizontal sections 1 may not communicate with each other. In other words, a partition plate is arranged between the adjacent horizontal sections 1. The partition plates play a role in rectifying a flow direction of water flow in the horizontal sections 1, so that the flow direction is mostly in a wave crest line direction, which is more advantageous in converting wave energy into air kinetic energy. In addition, a number of the individual backward bent duct structures in the power generation unit using wave energy cannot be too large. When the number is too large, a wave surface movement in the air chamber can generate phase difference and consistency deterioration. Instead, a convergence of airflow is not facilitated. Therefore, the number of the individual backward bent duct structures should be reasonably determined according to tests. The air chamber pipeline 4 can be arranged in a vertical direction or in a horizontal direction and can be arranged inside the vertical section 2 or outside the vertical section 2, according to design requirements. In a word, as long as the air chamber pipeline 4 can communicate with the air chamber of the vertical section 2. According to the power generation unit using wave energy of the present invention, a plurality of individual backward bent duct structures are connected together, so that vertical sections 2 communicate with each other. Namely, a group of power generation units using wave energy can share the air chamber to do work on the same air turbine, so that the flow rate of reciprocating airflow in the air chamber can be increased, the utilization efficiency of wave energy can be remarkably improved, and the installed capacity can be improved.

The air chamber pipeline 4 can be in a same direction with the horizontal section 1. That is, the air chamber pipeline 4 can be perpendicular to the vertical section 2. Meanwhile, the air chamber pipeline 4 is a section of pipeline connected to the vertical section 2 and extended outward. In order to guide the airflow into the air chamber pipeline 4, the baffle plate is required to be mounted on the top of the vertical section 2. Moreover, a diameter of the air chamber pipeline 4 can be smaller than an inner diameter of the vertical section 2, so that an impact force of air in the air chamber on the air turbine in the air chamber pipeline 4 can be enhanced, the utilization efficiency of wave energy can be improved, and the installed capacity can be improved. The air chamber pipeline 4 can be installed on an upper part of the floating body 3 and can be supported by the floating body 3, so as to ensure the stability of the installation structure of the air chamber pipeline 4 and prevent the reliability of the whole structure from being affected by vibration.

As shown in FIGS. 6 to 7 (according to the invention), a cross section of the horizontal section 1 is fan-shaped, which forms an open horizontal section 1 to increase the size of the inlet. So, the collected wave flow is larger. The wave flow gradually flows towards the vertical section 2 along the horizontal section 1. The pressure intensity of wave energy can be increased along with the gradual reduction of the inner diameter of the horizontal section 1, and a space of the vertical section 2 can be filled in a larger range. Meanwhile, the air chamber of the vertical section 2 can be squeezed and oscillated by filled waves to generate powerful air oscillation, which can better push the air turbine to perform work. Therefore, due to the fact that a sectional area of the water inlet of the fan-shaped horizontal section 1 is larger than an oscillating sectional area of the air chamber, the wave gathering effect is better, which is more advantageous in increasing a heave amplitude of the wave face in the air chamber. Meanwhile, the vertical section 2 can also be arranged to be of a fan-shaped structure, and a connected portion of the vertical section 2 which communicate with the horizontal section 1 should be in smooth transition to prevent the water flow and airflow from being obstructed.

The floating bodies 3 of different individual backward bent duct structures can be independently arranged and can be connected into a whole after the individual backward bent duct structures are connected into a power generation unit using wave energy. Or, a whole floating body 3 is directly used.

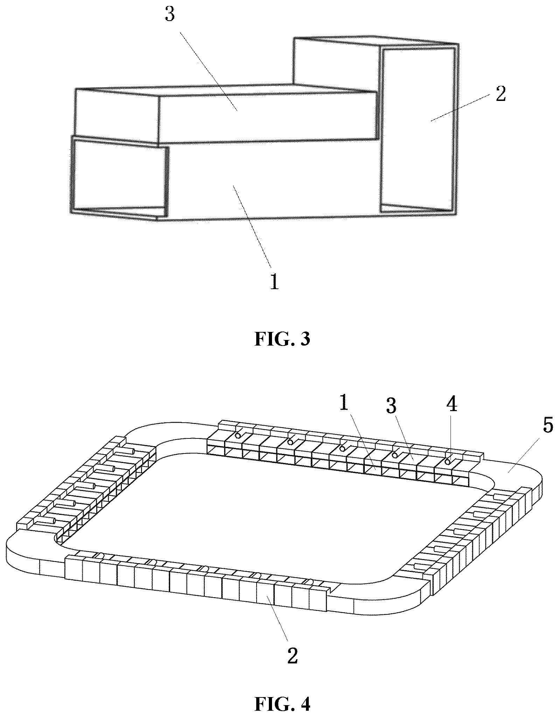

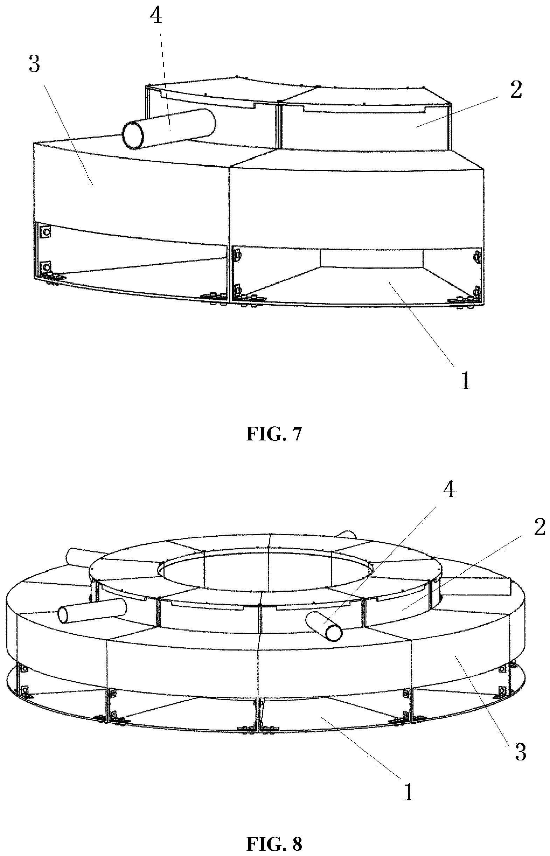

As shown in FIGS. 4, 5 (not according to the invention, for illustrative purposes only) and FIG. 8 (according to the invention), the present invention provides a power generation device using wave energy to which the power generation units using wave energy described above can be applied. A plurality of power generation units using wave energy are connected into a ring (as shown in FIG. 5, not according to the invention, and FIG. 8 according to the invention) or a polygon (as shown in FIG. 4, not according to the invention). Most of the aquaculture net cages are cylindrical or quadrangular. Quadrangular or annular power generation device using wave energy can be combined with existing open-sea production and life equipment to supply power to the aquaculture net cages. If the power generation device using wave energy is combined with a wind driven generator pile foundation on the deep sea (used for coupling wind energy and wave energy), a scheme of the triangular power generation device using wave energy array can be applied. As the development of wave energy is gradually developed to deep sea, the guarantee of energy supply is an important part. Previously, the research and development of wave energy was mainly used for independent power supply equipment on the sea, the power generation capacity cannot meet the power utilization requirement due to the limitation of the size of the device. In order to meet the requirement, a mode of the device with the scattered-point array is generally adopted. When the individual backward bent duct structure is independently applied, the individual backward bent duct structure has six-degree-of-freedom movement under the action of wave force, and the scattered-point type array is not beneficial to energy capture of a rear-row device due to the shielding effect. According to the power generation device using wave energy of the present invention, a plurality of power generation units using wave energy are connected into a ring or a polygon to form a compact array with a certain topological structure, so that the shielding effect can be avoided, and the movement of the power generation device using wave energy and the wave movement can generate resonance effect by reasonably arranging the array number of the power generation units using wave energy, which can obviously improve the overall performance of the device with arrays. It needs to be noted that each annular and polygonal power generation device using wave energy needs to be specifically designed according to application scenes and resonance conditions because of different sea areas where the device arranged, different sea wave conditions and different coupling resonance conditions with the equipment. As the whole power generation device using wave energy is of a blocked type assembly structure (modularization is formed), the topological structure, the number of arrays, the number of turbines and the like can be flexibly arranged according to the requirements of the commissioning places, the service positions and the demands for electricity consumption. The connection can be achieved by bolts, and the connection mode can refer to the connection mode of the power generation units using wave energy.

Further, the power generation units using wave energy that are formed by the fan-shaped backward bent duct structures according to the invention can be directly connected to form an annular structure. When the power generation units using wave energy that are formed by the rectangular backward bent duct structures not according to the invention are connected to form an annular or polygonal structure, connecting sections 5 need to be arranged at bent corners to form arc transition. The connecting section 5 can be used as the floating body 3 and can also be used for an integrated power supply device of a rear-end air turbine. Therefore, the whole structure can be assembled, and is compact in structure and convenient to be installed and disassembled. The device can be used immediately after being put into use, the device can be disassembled many times, and the device has the ability to be used continuously.

The connecting section 5 can be a connecting corner and is made of a material which is the same as that of the floating body 3. After the connecting section 5 is applied, the buoyancy distribution of the power generation device using wave energy can be balanced, and the number and the size of the floating bodies 3 can be reduced. The power generation device using wave energy can be formed by assembling a plurality of power generation units using wave energy which can share anchor points therebetween, and a mooring mode is reasonably arranged, so that the commissioning cost can be reduced.

The present invention also provides a power generation method of a power generation device using wave energy which can use the power generation device using wave energy according to the invention as described hereinbefore, including the following steps.

In step 1, under predetermined wave conditions, draught of the power generation device using wave energy are adjusted by replacing different floating bodies 3 (by replacing floating bodies 3 with different sizes or different materials or adjusting the size of counterweight in the floating body 3), and wave heights of the wave movement in an air chamber which are corresponding to different draught can be measured.

In step 2, the measured wave heights of the wave movement are compared with each other, and the draught corresponding to a maximum wave height of the wave movement is selected,

In step 3, the power generation device using wave energy is installed and placed in the sea based on the selected draught, and wave energy is used for power generation.

The present invention provides a thought for improving the utilization efficiency of wave energy by forming resonance, and changes such a mode that in the prior art that only an individual backward bent duct structure is improved and the number of scattered arrays of the backward bent duct structures is increased to enhance the generating capacity. And, the maximum movement wave height of the water surface in the air chamber is obtained in a process that parameter optimization is performed on the power generation device using wave energy. In turn, the optimal use conditions of the device can be achieved by improving relevant parameters, so that the utilization efficiency of wave energy can be improved.

Further, when the draught is adjusted, the wave heights of the wave movement are measured according to a low-density draught spacing firstly, and a section of wave heights of the wave movement which has relatively larger wave heights is selected.

And then the section of wave heights of the wave movement is measured based on a high-density draught spacing to obtain the draught which is corresponding to the maximum wave movement height.

After an optimization of the draught is completed, parameters including an opening direction of the air chamber, an opening size of the air chamber, a sectional area size of the air chamber, a length of the bent duct and an opening sectional area of the bent duct can be optimized to obtain an optimal resonance effect.

The present invention provides a specific optimization embodiment. Under certain wave conditions, the optimal parameters of the individual backward bent duct structures are found by researching the parameters of the individual backward bent duct structures.

Taking the draught as an example, a maximum energy conversion is taken as the target of the individual backward bent duct structures. The optimal draught of the individual backward bent duct structures is obtained by measurement and calculation. which guides selection of the material of the floating body 3, counterweight of the individual backward bent duct structure and the like in practical application.

The wave conditions in the embodiment refer to wave conditions of the sea area in Qingdao area of China. A length of the individual backward bent duct structure is designed to be 13.6 m, a width of the individual backward bent duct structure is designed to be 6.4 m, and a height of the individual backward bent duct structure is designed to be 10.4 m. A length of the horizontal section 1 is 13.6 m, and a length of the vertical section 2 is 10.4 m. The individual backward bent duct structure not according to the invention is rectangular pipe with a length-width ratio of 2:1. That is, a length of a section of the rectangular pipe is 6.4 m, and a width thereof is 3.2 m. In order to provide buoyancy for the individual backward bent duct structure and keep the individual backward bent duct structure balanced, a cuboid floating body 3 with the size of 7.2 m × 10.4 m × 6.4 m is arranged.

A scale of the numerical model is selected to be 1:16 through a numerical calculation method under the Froude similarity criterion.

A prototype wave conditions are that the wave height is 2 m and the period is 7s. The numerical calculation wave conditions are that the wave height is 0.12 m and the period is 1.75 s under this similar criterion.

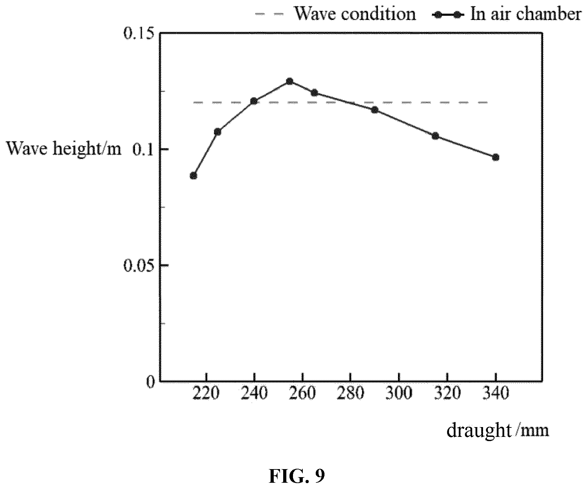

The draft position of the individual backward bent duct structure is changed, and a distance between a bottom of a front wall of the device and the water surface is taken as the draught. And, the corresponding conditions of the wave heights of the wave movement in the air chamber of the device are researched under the conditions that the draught is 0.215 m, 0.240 m, 0.265 m, 0.290 m, 0.315 m and 0.340 m respectively. It can be seen that under the condition that the draft of the individual backward bent duct structure is 0.240-0.265 m, the response intensity of the wave movement in the air chamber is larger, and the movement amplitude of the water surface in the air chamber is higher than the movement amplitude of a water surface in a wave field. By further investigating the draught in this range, as shown in FIG. 9, a curve of the relationship between the draught of the individual body backward bent duct structure and the wave height can be shown, thereby obtaining an optimal draught of 0.255 m. Through the method, the optimization of the draught parameter is completed. The method can be used for guiding design and manufacture of an array structure of a later power generation device using wave energy.

Specific examples not according to the invention are used for illustration of the principles and implementation methods useful in the context of the present invention. The description of the above-mentioned embodiments is used to help illustrate the method and its core idea of the present invention. In addition, there will be some modifications to the specific implementations for those skilled in the art. The content of this specification shall not be construed as a limitation of the scope of the patent which is defined by the appended claims.

## Claims

1. A power generation unit using wave energy, comprising a plurality of individual backward bent duct structures connected in parallel, wherein each of the plurality of the individual backward bent duct structures comprises a bent duct and a floating body (3), the bent duct comprises a vertical section (2) of the bent duct and a horizontal section (1) of the bent duct, an upper part of the horizontal section (1) of the bent duct is connected with the floating body (3), the vertical section (2) communicates with another vertical section of the bent duct that is adjacent to the vertical section (2), the vertical section (2) of the bent duct of one of the plurality of the individual backward bent duct structures is connected with an air chamber pipeline (4), and an air turbine is arranged in the air chamber pipeline (4),
**characterized in that**
a cross section of the horizontal section (1) of the bent duct is fan-shaped to form an open horizontal section, and an inner dimension of the horizontal section (1) reduces gradually towards a centre of the horizontal section (1).

2. The power generation unit using wave energy according to claim 1, wherein the air chamber pipeline (4) is in a same direction as the horizontal section (1) of the bent duct, and is located at an upper part of the floating body (3).

3. The power generation unit using wave energy according to claim 1, wherein the floating body (3) is connected with floating bodies of other ones of the plurality of individual backward bent duct structures into a whole.

4. A power generation device using wave energy, comprising a plurality of power generation units using wave energy according to any one of claims 1 to 2, and the plurality of power generation units using wave energy are connected into a ring or a polygon.

5. The power generation device using wave energy according to claim 4, wherein for each of the plurality of power generation units using wave energy, the power generation unit is directly connected with an other power generation unit of the plurality of power generation units using wave energy which is adjacent to the power generation unit, or is connected with the other power generation unit via a connecting section (5).

6. The power generation device using wave energy according to claim 5, wherein the connecting section (5) is a connecting corner, and has a same material as the floating body (3).

7. A power generation method of a power generation device using wave energy as defined in claim 4, the method comprising:
under predetermined wave conditions, adjusting draught of the power generation device using wave energy, and measuring wave heights of wave movement in an air chamber which are corresponding to different draught respectively;
comparing the wave heights of the wave movement after being measured with each other, and selecting the draught which is corresponding to a maximum one of the wave heights of the wave movement; and
installing the power generation device using wave energy based on the draught after being selected, and generating power by using wave energy.

8. The power generation method of the power generation device using wave energy according to claim 7, comprising: when the draught is adjusted,
measuring the wave heights of the wave movement based on a low-density draught spacing, and selecting a section of the wave heights of the wave movement which has relatively larger wave heights; and
measuring the section of the wave heights of the wave movement based on a high-density draught spacing, and obtaining the draught which is corresponding to the maximum one of the wave heights of the wave movement.

9. The power generation method of the power generation device using wave energy according to claim 7 or 8, further comprising optimizing parameters comprising an opening direction of the air chamber, an opening size of the air chamber, a sectional area size of the air chamber, a length of a bent duct and an opening sectional area of the bent duct.

## Patentansprüche

1. Stromerzeugungseinheit unter Verwendung von Wellenenergie, umfassend eine Mehrzahl von einzelnen zurückgewinkelten Leitungskanalstrukturen, die parallel miteinander verbunden sind, wobei jede der Mehrzahl von einzelnen zurückgewinkelten Leitungskanalstrukturen einen abgewinkelten Leitungskanal und einen Schwimmerkörper (3) umfasst, wobei der abgewinkelte Leitungskanal einen vertikalen Abschnitt (2) des abgewinkelten Leitungskanals und einen horizontalen Abschnitt (1) des abgewinkelten Leitungskanals umfasst, wobei ein oberer Abschnitt des horizontalen Abschnitts (1) des abgewinkelten Leitungskanals mit dem Schwimmerkörper (3) verbunden ist, wobei der vertikale Abschnitt (2) mit einem weiteren vertikalen Abschnitt des abgewinkelten Leitungskanals in Verbindung steht, der benachbart zu dem vertikalen Abschnitt (2) ist, wobei der vertikale Abschnitt (2) des abgewinkelten Leitungskanals der Mehrzahl von einzelnen zurückgewinkelten Leitungsstrukturen mit einer Luftkammerleitung (4) verbunden ist, und wobei eine Luftturbine in der Luftkammerleitung (4) angeordnet ist,
**dadurch gekennzeichnet, dass**
ein Querschnitt des horizontalen Abschnitts (1) des abgewinkelten Leitungskanals fächerförmig gebildet ist, um einen offenen horizontalen Abschnitt zu bilden, und sich eine Innenabmessung des horizontalen Abschnitts (1) in Richtung auf ein Zentrum des horizontalen Abschnitts (1) schrittweise verringert.

2. Stromerzeugungseinheit unter Verwendung von Wellenenergie nach Anspruch 1, wobei sich die Luftkammerleitung (4) in derselben Richtung wie der horizontale Abschnitt (1) des abgewinkelten Leitungskanals erstreckt und sich in einem oberen Abschnitt des Schwimmerkörpers (3) befindet.

3. Stromerzeugungseinheit unter Verwendung von Wellenenergie nach Anspruch 1, wobei der Schwimmerkörper (3) mit Schwimmerkörpern von anderen aus der Mehrzahl von einzelnen zurückgewinkelten Leitungskanalstrukturen zu einem Ganzen verbunden ist.

4. Stromerzeugungsvorrichtung unter Verwendung von Wellenenergie nach Anspruch 1, aufweisend eine Mehrzahl von Stromerzeugungseinheiten unter Verwendung von Wellenenergie nach einem der Ansprüche 1 bis 2, und wobei die Mehrzahl von Stromerzeugungseinheiten unter Verwendung von Wellenenergie zu einem Ring oder zu einem Polygon verbunden ist.

5. Stromerzeugungsvorrichtung unter Verwendung von Wellenenergie nach Anspruch 4, wobei für jede der Mehrzahl von Stromerzeugungseinheiten unter Verwendung von Wellenenergie die Stromerzeugungseinheit direkt mit einer weiteren Stromerzeugungseinheit der Mehrzahl von Stromerzeugungseinheiten unter Verwendung von Wellenenergie verbunden ist, die benachbart zur der Stromerzeugungseinheit ist, oder mit der anderen Stromerzeugungseinheit über einen Verbindungsabschnitt (5) verbunden ist.

6. Stromerzeugungsvorrichtung unter Verwendung von Wellenenergie nach Anspruch 5, wobei der Verbindungsabschnitt (5) ein Verbindungs-Eckstück ist, und aus dem gleichen Material wie der Schwimmerkörper (3) besteht.

7. Stromerzeugungsverfahren für eine Stromerzeugungsvorrichtung unter Verwendung von Wellenenergie nach Anspruch 4, wobei das Verfahren folgendes umfasst:
Einstellen, unter vorbestimmten Wellenbedingungen, der Luftströmung der Stromerzeugungsvorrichtung unter Verwendung von Wellenenergie, und Messen von Wellenhöhen der Wellenbewegung in einer Luftkammer, die jeweils verschiedenen Luftströmungen zugeordnet sind;
Vergleichen der Wellenhöhen der Wellenbewegung, nachdem sie gemessen wurden, mit jeder anderen, und Auswählen der Luftströmung, die einem Maximum der Wellenhöhen der Wellenbewegung entspricht; und
Installieren der Stromerzeugungsvorrichtung unter Verwendung von Wellenenergie basierend auf der Luftströmung, nachdem sie ausgewählt wurde, und Erzeugen von Strom unter Verwendung von Wellenenergie.

8. Stromerzeugungsverfahren für eine Stromerzeugungsvorrichtung unter Verwendung von Wellenenergie nach Anspruch 7, wobei das Verfahren folgendes umfasst, wenn die Luftströmung eingestellt wird:
Messen der Wellenhöhen der Wellenbewegung basierend auf einem Luftströmungsabstand mit geringer Dichte, und Auswählen eines Abschnitts der Wellenhöhen der Wellenbewegung, die relativ betrachtet größere Wellenhöhen aufweist; und
Messen des Abschnitts der Wellenhöhe der Wellenbewegung basierend auf einem Luftströmungsabschnitt mit hoher Dichte, und Erhalten der Luftströmung, die dem Maximum der Wellenhöhen der Wellenbewegung entspricht.

9. Stromerzeugungsverfahren für eine Stromerzeugungsvorrichtung unter Verwendung von Wellenenergie nach Anspruch 7 oder 8, wobei das Verfahren weiterhin umfasst: Optimieren von Parametern umfassend eine Öffnungsrichtung der Luftkammer, eine Öffnungsgröße der Luftkammer, eine Querschnittsgröße der Luftkammer, eine Länge eines abgewinkelten Leitungskanals und eine Querschnittsgröße des abgewinkelten Leitungskanals.

## Revendications

1. Unité de génération de puissance utilisant de l'énergie des vagues, comprenant une pluralité de structures à conduit courbé vers l'arrière individuelles connectées en parallèle, chacune de la pluralité des structures à conduit courbé vers l'arrière individuelles comprenant un conduit courbé et un corps flottant (3), le conduit courbé comprenant une section verticale (2) du conduit courbé et une section horizontale (1) du conduit courbé, une partie supérieure de la section horizontale (1) du conduit courbé étant connectée au corps flottant (3), la section verticale (2) communiquant avec une autre section verticale du conduit courbé qui est adjacente à la section verticale (2), la section verticale (2) du conduit courbé d'une de la pluralité de structures à conduit courbé vers l'arrière individuelles étant connectée à une canalisation (4) de chambre à air, et une turbine à air étant agencée dans la canalisation (4) de chambre à air,
**caractérisée en ce que**
une section transversale de la section horizontale (1) du conduit courbé est en forme de ventilateur pour former une section horizontale ouverte, et une dimension interne de la section horizontale (1) diminue graduellement vers un centre de la section horizontale (1).

2. Unité de génération de puissance utilisant de l'énergie des vagues selon la revendication 1, la canalisation (4) de chambre à air étant dans une même direction que la section horizontale (1) du conduit courbé, et étant située dans une partie supérieure du corps flottant (3).

3. Unité de génération de puissance utilisant de l'énergie des vagues selon la revendication 1, le corps flottant (3) étant connecté avec des corps flottants d'autres de la pluralité de structures à conduit courbé vers l'arrière individuelles en un tout.

4. Dispositif de génération de puissance utilisant de l'énergie des vagues, comprenant une pluralité d'unités de génération de puissance utilisant de l'énergie des vagues selon l'une quelconque des revendications 1 à 2, et la pluralité d'unités de génération de puissance utilisant de l'énergie des vagues étant connectées en anneau ou en polygone.

5. Dispositif de génération de puissance utilisant de l'énergie des vagues selon la revendication 4, pour chacune de la pluralité d'unités de génération de puissance utilisant de l'énergie des vagues, l'unité de génération de puissance étant directement connectée à une autre unité de génération de puissance de la pluralité d'unités de génération de puissance utilisant de l'énergie des vagues qui est adjacente à l'unité de génération de puissance, ou étant connectée à l'autre unité de génération de puissance via une section de connexion (5).

6. Dispositif de génération de puissance utilisant de l'énergie des vagues selon la revendication 5, la section de connexion (5) étant un coin de connexion, et ayant un même matériau que le corps flottant (3).

7. Procédé de génération de puissance d'un dispositif de génération de puissance utilisant de l'énergie des vagues selon la revendication 4, le procédé comprenant :
sous des conditions de vagues prédéterminées, l'ajustement d'un tirant d'eau du dispositif de génération de puissance utilisant de l'énergie des vagues, et la mesure de hauteurs de vagues d'un mouvement de vagues dans une chambre à air qui correspondent à différents tirants d'eau respectivement ;
la comparaison des hauteurs de vagues du mouvement de vagues après avoir été mesurées les unes avec les autres, et la sélection du tirant d'eau qui correspond à une hauteur maximale des hauteurs de vagues du mouvement de vagues ; et
l'installation du dispositif de génération de puissance utilisant de l'énergie des vagues sur la base du tirant d'eau après avoir été sélectionné, et la génération de puissance en utilisant de l'énergie des vagues.

8. Procédé de génération de puissance du dispositif de génération de puissance utilisant de l'énergie des vagues selon la revendication 7, comprenant : lorsque le tirant d'eau est ajusté,
la mesure des hauteurs de vagues du mouvement de vagues sur la base d'un espacement de tirant d'eau basse densité, et la sélection d'une section des hauteurs de vagues du mouvement de vagues qui a des hauteurs de vagues relativement plus grandes ; et
la mesure de la section des hauteurs de vagues du mouvement de vagues sur la base d'un espacement de tirant d'eau haute densité, et l'obtention du tirant d'eau qui correspond à la hauteur maximale des hauteurs de vagues du mouvement de vagues.

9. Procédé de génération de puissance du dispositif de génération de puissance utilisant de l'énergie des vagues selon la revendication 7 ou 8, comprenant en outre
l'optimisation de paramètres comprenant une direction d'ouverture de la chambre à air, une taille d'ouverture de la chambre à air, une taille de section en coupe transversale de la chambre à air, une longueur du conduit courbé et une section en coupe transversale d'ouverture du conduit courbé.
